Europäisches Patentamt

European Patent Office

Office européen des brevets

(19)

(11) Veröffentlichungsnummer: **0 158 586**
**B1**

(12) # EUROPÄISCHE PATENTSCHRIFT

(45) Veröffentlichungstag der Patentschrift:
**19.11.87**

(51) Int. Cl.⁴: **G 01 L 19/14**

(21) Anmeldenummer: **85730032.1**

(22) Anmeldetag: **01.03.85**

(54) **Druck- oder Druckdifferenzmessgerät.**

(30) Priorität: **09.03.84 DE 8407656 U**

(43) Veröffentlichungstag der Anmeldung:
**16.10.85 Patentblatt 85/42**

(45) Bekanntmachung des Hinweises auf die Patenterteilung:
**19.11.87 Patentblatt 87/47**

(84) Benannte Vertragsstaaten:
**BE DE FR GB IT NL SE**

(56) Entgegenhaltungen:
**DE - A - 2 234 690**
**DE - A - 3 043 356**
**FR - A - 2 166 914**
**US - A - 3 869 920**
**US - A - 4 135 400**

(73) Patentinhaber: **Siemens Aktiengesellschaft Berlin und München, Wittelsbacherplatz 2, D-8000 München 2 (DE)**

(72) Erfinder: **Pehlgrim, Horst, Gorgasring 27b, D-1000 Berlin 20 (DE)**

**Beschreibung**

Die Erfindung bezieht sich auf ein Druck- oder Druckdifferenzmessgerät mit einem topfartigen Gehäuse, in dem mindestens ein elektronischer Schaltungsteil untergebracht und in dessen Boden eine Öffnung zur Befestigung eines den Druck oder die Druckdifferenz erfassenden Messwerkes vorhanden ist.

Bei einem bekannten Messgerät dieser Art (Fuji Electric-Druck-schrift EJPW 52-6-1 «Whole Aspect of Fuji FC-series Transmitter», Seiten 5 und 6) ist in einem topfartigen Gehäuse ein elektronischer Schaltungsteil mit zylindrischer Gestalt festgeschraubt, mit dem die elektrischen Anschlüsse des Messwerkes durch Löten verbunden sind. Auf dieses erste elektronische Schaltungsteil ist ein zweites elektronisches Schaltungsteil mit ähnlicher Form aufsteckbar und durch Schrauben fest verbindbar. Auf dieses zweite elektronische Schaltungsteil ist ein Anzeigeinstrument steckbar. Das topfartige Gehäuse ist mit einer Schraubkappe verschliessbar. Das topfartige Gehäuse des bekannten Messgerätes ist ferner mit einem seitlichen Ansatz zur Bildung eines Aufnahmeraumes versehen, der gegenüber dem Innenraum des topfartigen Gehäuses durch eine druckdichte Wand mit elektrischen Durchführungen abgegrenzt ist. Die druckdichte Wand ist dabei durch eine druckdichte Platte gebildet, die dichtend eine Öffnung zum Innenraum des topfartigen Gehäuses abdeckt und die elektrischen Durchführungen trägt. In dem Aufnahmeraum sind äussere Anschlussklemmen des Messgerätes untergebracht.

Der Erfindung liegt die Aufgabe zugrunde, ein Druck- oder Druckdifferenzmessgerät vorzuschlagen, bei dem sich unter Erzielung eine konstruktiv einfachen, montage- und service-freundlichen Ausgestaltung des topfartige Gehäuses dieses in unterschiedlicher Lage in Bezug auf das den Druck oder die Druckdifferenz erfassende Messwerk anordnen lässt.

Zur Lösung dieser Aufgabe ist bei einem Druck- oder Druckdifferenzmessgerät der eingangs angegeben Art erfindungsgemäss der mindestens eine elektronische Schaltungsteil als Flachbaugruppe ausgebildet und in das topfartige Gehäuse mittels achsparalleler Führungen an der Innerwand des Gehäuses unter Erstreckung in einer achsparallelen Ebene eingeschoben, und das topfartige Gehäuse weist in seiner Wand in einem Bereich unterhalb der Flachbaugruppe mindestens eine weitere Öffnung zur Befestigung des Messwerkes auf. Dabei wird unter einer Flachbaugruppe eine elektronische Schaltungseinheit verstanden, bei der die einzelnen elektronischen Bauelemente auf einer gedruckten Leiterplatte angeordnet sind.

Ein Vorteil des erfindungsgemässen Messgerätes besteht darin, dass aufgrund der Verwendung einer achsparallel im topfartigen Gehäuse angeordneten Flachbaugrupe zu beiden Seiten dieser Flachbaugruppe Bereiche an der Wand des Gehäuses gebildet werden, die nicht nur zur Aufnahme der weiteren Öffnung zur Befestigung des Messwerkes geeignet sind, sondern in denen sich auch die Verbindungsleitungen zu dem Messwerk führen lassen. Das erfindungsgemässe Messgerät kann daher in an sich bekannter Weise mit seinem topfartigen Gehäuse in axialer Richtung mit dem die Druck oder die Druckdifferenz erfassenden Messwerk gekoppelt werden, aber auch in radialer Richtung über die weitere Öffnung mit diesem Messwerk verbunden werden. Daher kann mit dem erfindungsgemässen Messgerät den jeweils vorhandenen Einbaumöglichkeiten in vorteilhafter Weise entsprochen werden.

Es ist zwar aus der US-PS 4 085 620 ein Druckmessgerät bekannt, bei dem ein den Druck erfassendes Messwerk über eine Öffnung in einem topfartigen Gehäuse radial mit diesem Gehäuse verbunden ist und bei dem die elektronischen Schaltungsteile als Flachbaugruppen ausgebildet sind, jedoch ist bei diesem Messgerät das den Druck erfassende Messwerk nur radial an dem topfartigen Gehäuse anbringbar; ausserdem sind bei dem bekannten Druckmessgerät die als Flachbaugruppen ausgebildeten elektronischen Schaltungsteile quer zur Achse des topfartigen Gehäuses angeordnet. Ein axialer Anschluss des den Druck erfassenden Messwerkes ist bei dem bekannten Druckmessgerät nicht möglich, da bei ihm ein Aufnahmeraum für äussere Anschlussklemmen in axialer Richtung hinter dem die elektronischen Schaltungsteile aufnehmenden Raum des Gehäuses angeordnet ist.

Im Hinblick auf eine besonders günstige Ausnutzung des topfartigen Gehäuses unter Berücksichtigung der Forderung nach unterschiedlichen Anbaumöglichkeiten des topfartigen Gehäuses an das Messwerk wird es bei dem erfindungsgemässen Messgerät als vorteilhaft angesehen, wenn die druckdichte Wand oberhalb der Flachbaugruppe liegt. Dies ist deshalb vorteilhaft, weil im Bereich der druckdichten Wand die Durchführungen verlaufen, für die im Gehäuse ein ausreichender Raum zur Verfügung gestellt werden muss; dieser Raum ist in dem der Flachbaugruppe gegenüberliegenden Bereich der Wand des topfartigen Gehäuses vorhanden.

Aus vor allem herstellungstechnischen Gründen ist es vorteilhaft, bei dem erfindungsgemässen Messgerät die druckdichte Wand allein von einem oberhalb der Flachbaugruppe liegenden Teil der Wand des topfartigen Gehäuses zu bilden. Es entfällt nämlich dann die Notwendigkeit, eine Druckplatte dichtend im Bereich einer Öffnung zwischen dem Aufnahmeraum des topfartigen Gehäuses und dessem Inneraum zu befestigen.

Als vorteilhaft hat es sich ferner erwiesen, wenn bei dem erfindungsgemässen Messgerät die elektrischen Durchführungen an ihren in den Inneraum des Gehäuses hineinreichenden Enden mit Kontakten versehen sind; die Flachbaugruppe trägt Gegenkontakte, die sich in eingeschobenem Zustand der Flachbaugruppe in Berührung mit den Kontakten befinden. Ein wesentlicher Vorteil des solchermassen ausgebildeten erfindungsgemässen Messgerätes besteht darin, dass Lötverbindungen zwischen den elektrischen Durchführungen und der Flachbaugruppe entfallen können, so dass eine elektrische Verbindung zwischen den elektrischen Durchführungen und der Flachbaugruppe beim Einschieben der Flachbaugruppe in das topfartige Gehäuse gewissermassen selbsttätig hergestellt wird.

Aus herstellungstechnischen Gründen und zur Erzielung einer besonderen Servicefreundlichkeit ist es ferner vorteilhaft, am Boden des topfartigen Gehäuses des erfindungsgemässen Messgerätes eine Kontaktleiste anzubringen, an der zu dem Messwerk führende Leitungen angeschlossen sind; die Flachbaugruppe trägt an seiner Stirnseite eine Steckerleiste zum Einführen in die Kontaktleiste. Damit sind bei einem derartig aufgebauten Messgerät auch keine Lötverbindungen zwischen dem den Druck oder die Druckdifferenz erfassenden Messwerk und der elektronischen Schaltung im topfartigen Gehäuse erforderlich; allein durch das Einschieben der Flachbaugruppe in das topfartige Gehäuse wird eine diesbezügliche elektrische Verbindung hergestellt.

Bei einer besonders bevorzugten Ausführungsform des erfindungsgemässen Druck- oder Druckdifferenzmessgerätes ist die Flachbaugruppe an einem zentralen Tragkörper angebracht, der auf seiner von dem Boden des topfartigen Gehäuses abgewandten Seite einen etwa kreisförmigen Stirnbereich aufweist und sich etwa im rechten Winkel dazu erstreckende, achsparallele Führungsteile zum Eingriff mit den achsparallelen Führungen an der Innenwand des topfartigen Gehäuses enthält. Ein derartiger Tragkörper ist unter anderem dann von Vorteil, wenn — wie dies in der Regel bei dem erfindungsgemässen Druck- oder Druckdifferenzmessgerät der Fall ist — nicht nur eine einzige Flachbaugruppe in dem topfartigen Gehäuse zu halten ist, sondern zwei Flachbaugruppen.

Der zentrale Tragkörper kann darüber hinaus in vorteilhafter Weise dazu benutzt werden, in seinem Stirnbereich ein Anzeigeinstrument mittels einer Schnappverbindung zu befestigen.

Auch kann in vorteilhafter Weise an dem Stirnbereich des zentralen Tragkörpers ein schwenkbarer Zugbügel gehalten sein, mit dem sich der zentrale Tragkörper aus dem topfartigen Gehäuse herausziehen lässt.

Bei Verwendung eines derart ausgestalteten zentralen Tragkörpers lässt sich dann die gesamte elektronische Schaltung des Druck- oder Druckdifferenzmessgerätes zusammen mit einem Anzeigeinstrument gewissermassen mit einem Handgriff in das topfartige Gehäuse einführen oder aus dem Gehäuse entnehmen.

Der zentrale Tragkörper weist vorteilhafterweise an einander zugewandten Seiten seiner Führungsteile Längsnuten auf, in die die Flachgruppe eingeführt ist. Bei Verwendung mehrerer Flachbaugruppen sind entsprechend viele Längsnuten übereinander vorhanden.

Als vorteilhaft wird es dabei angesehen, wenn die Flachbaugruppe auf ihrer dem Stirnbereich des zentralen Tragkörpers zugewandten Seite Kontaktfedern trägt, die in Durchgangslöcher im Stirnbereich hineinragen und dort lösbar verriegelt sind. Dabei können die Kontaktfedern auf der Flachbaugruppe elektrisch derart angeordnet sein, dass sie zu Prüfanschlüssen führen, so dass die in den Durchgangslöchern angeordneten Kontaktfedern ohne Entnahme des zentralen Tragkörpers und der Flachbaugruppe aus dem topfartigen Gehäuse einer Prüfung unterzogen werden kann.

Zur Erläuterung der Erfindung ist in Figur 1 im wesentlichen ein Längsschnitt, in Figur 2 teilweise eine Ansicht auf den Aufnahmeraum und teilweise ein Querschnitt und in Figur 3 teilweise eine Ansicht von vorn bei abgenommener Schraubkappe und teilweise ein Schnitt durch ein Ausführungsbeispiel des erfindungsgemässen Druck- oder Druckdifferenzmessgerätes dargestellt.

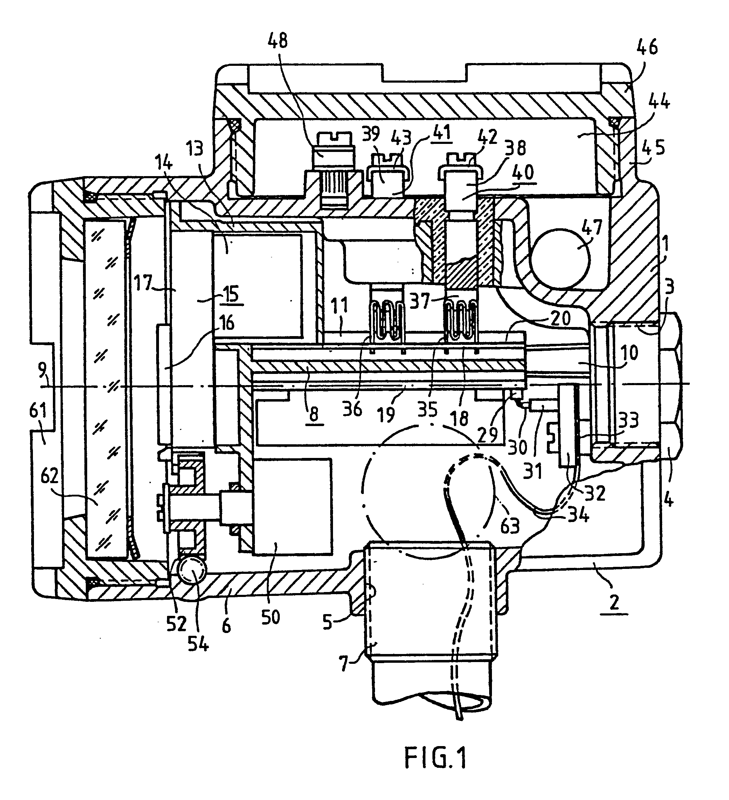

Wie insbesondere die Figur 1 erkennen lässt, ist im Boden 1 eines topfartigen Gehäuses 2 eines Druck- oder Druckdifferenzmessgerätes eine Öffnung 3 vorhanden, die zur Befestigung eines in den Figuren nicht dargestellen, einen Druck oder eine Druckdifferenz erfassenden Messwerkes dienen kann; im dargestellen Ausführungsbeispiel ist die Öffnung 3 durch eine Dichtmutter 4 verschlossen. Eine weitere Öffnung 5 in einer Wand 6 des topfartigen Gehäuses 2 dient ebenfalls zur Befestigung eines den Druck oder die Druckdifferenz erfassenden Messwerkes. Im dargestellen Ausführungsbeispiel ist über diese weitere Öffnung 5 ein Messwerk mittels eines Gewindestutzens 7 angeschlossen.

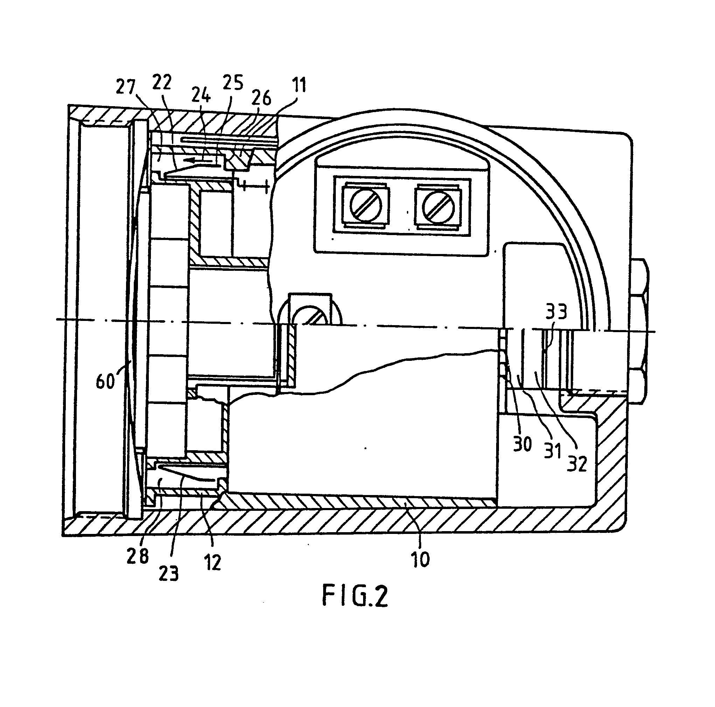

In dem Gehäuse 2 befindet sich ein zentraler Tragkörper 8, der in einer zur Längsachse 9 des topfartigen Gehäuses 2 parallelen Richtung eingeschoben ist, wobei zur Führung des zentralen Tragkörpers 8 an der Innenwand des topfartigen Gehäuses 2 einander gegenüberliegend Führungen 10 angeordnet sind; in diese Führungen greifen Führungsteile 11 und 12 (vgl. Figur 2) des zentralen Tragkörpers 8 ein.

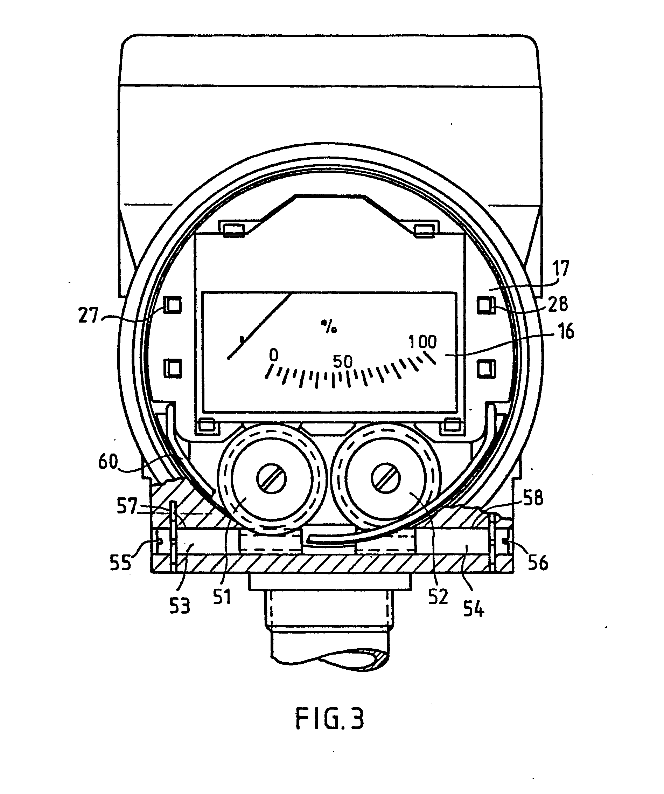

Der zentrale Tragkörper 8 weist einen Ansatz 13 auf, in dem ein Messwerk 14 eines Anzeigeinstrumentes 15 untergebracht ist, dessen Skalenteil 16 im etwa kreisringförmigen Stirnbereich 17 (vgl. Figur 3) des zentralen Tragkörpers 8 untergebracht ist.

Der zentrale Tragkörper 8 weist ferner eine Flachbaugruppe 18 und eine weitere Flachbaugruppe 19 auf. Beide Flachbaugruppen sind (im ausgebauten Zustand) von hinten her in Richtung auf den Stirnbereich 17 des zentralen Tragkörpers 8 in Nuten 20 in den seitlichen Führungsteilen 11 bzw. 12 eingeschoben. Durch Kontaktfedern 22 und 23 (vgl. Figur 2) sind die Flachbaugruppen 18 und 19 arretiert, weil die Kontaktfedern 22 und 23 nach Einschieben der Flachbaugruppen in Richtung des Pfeiles 24 mit ihren jeweils freien Enden 25 auffedern und sich damit hinter einen Ansatz 26 legen, der in die Kontaktfedern 22 und 23 aufnehmenden Durchgangslöchern 27 und 28 im Stirnbereich 17 des zentralen Tragkörpers 8 vorhanden sind. Entriegelung der Flachbaugruppen 18 und 19 kann in einfacher Weise durch Einführen von Steckern oder Schraubenziehern entgegen dem Pfeil 24 in die Durchgangslöcher 27 und 28 vorgenommen werden.

Die Kontaktfedern 22 und 23 sind auf der Flachbaugruppe 18 bzw. 19 in nicht dargesteller Weise mit Prüfanschlusspunkten verbunden, so dass durch Anschluss eines Prüfgerätes von dem Stirnbereich 17 des zentralen Tragkörpers 8 aus eine Prüfung ohne Entnahme des zentralen Tragkörpers 8 vorgenommen werden kann. Die Kontaktfedern 22 und 23 dienen daher sowohl dem Anschluss eines Prüfgerätes als auch der Arretierung der Flachbaugruppen 18 bzw. 19 am zentralen Tragkörper 8.

Wie insbesondere die Figur 1 erkennen lässt, ist an der Flachbaugruppe 19 eine Steckereinrichtung 29 an dem von dem Stirnbereich 17 des zentralen Tragkörpers 8 abgewandten Seite angebracht. Die Steckereinrichtung 29 weist eine Reihe von Steckern 30 auf (siehe auch Figur 2), die sich in achsparalleler Richtung erstecken. Im eingeschobenen Zustand des zentralen Tragkörpers 8 greifen die Stecker 30 in eine Steckerleiste 31 ein, die sich an einem Stützkörper 32 befindet. Zusammen mit diesem Stützkörper 32 ist ein Ende 33 eines Leiterplattenbandes 34 durch Schrauben mit dem Boden 1 des topfartigen Gehäuses 2 verbunden. Die auf dem Leiterplattenband 34 angeordneten Strombahnen sind in nicht dargesteller Weise über die Kontaktleiste 31 mit den Steckern 30 elektrisch verbunden. Das Leiterplattenband 34 ist durch die weitere Öffnung 5 im Gehäuse 2 zu dem nicht dargestellen, den Druck oder die Druckdifferenz erfassenden Messwerk geführt, das beispielsweise so ausgeführt sein kann, wie es in der oben erwähnten Firmen-Druckschrift dargestellt ist. Bevorzugt wird jedoch ein Messwerk, bei dem mittels eines Halbleiter-Sensors aus dem erfassten Druck oder der erfassten Druckdifferenz ein elektrisches Signal gewonnen ist.

Wie insbesondere die Figur 1 ferner zeigt, ist die Flachbaugruppe 18 mit Kontakten 35 und 36 versehen, die sich in der Figur nach oben erstrecken. Diese Kontakte 35 und 36 befinden sich im eingeschobenen Zustand des zentralen Tragkörpers 8 im Kontakt mit feststehenden, eingegossenen Kontaktelementen 37 von Kontaktteilen 38 und 39 zweier elektrischer Durchführungen 40 und 41. Diese elektrischen Durchführungen 40 und 41 verbinden Anschlussklemmen 42 und 43 in einem Aufnahmeraum 44, der von einem seitlichen Ansatz 45 des Gehäuses 2 gebildet ist. Dieser Ansatz 45 liegt der weiteren Öffnung 5 im Gehäuse gegenüber und damit oberhalb der Flachbaugruppen 18 und 19, während die weitere Öffnung 5 in der Figur 1 unterhalb dieser Flachbaugruppen liegt. Der Aufnahmeraum 44, der mittels einer Schraubkappe 46 dicht verschliessbar ist, steht über eine Durchgangsöffnung 47 mit dem Aussenraum des Messgerätes in Verbindung; über diese Durchgangsöffnung 47 können die in den Figuren nicht dargestellten Anschlussleitungen in das Gehäuse 2 eingeführt und zu den Anschlussklemmen 42 und 43 geführt werden.

In dem Aufnahmeraum 44 ist ausserdem noch eine Erdungsklemme 48 angebracht.

Am zentralen Tragkörper 8 sind ferner (vgl. insbesondere Figuren 1 und 3) Potentiometer 50 angeordnet, die jeweils mit einem Zahnrad 51 und 52 versehen sind. Jedes Zahnrad 51 bzw. 52 befindet sich im Eingriff mit einem Schneckenrad 53 bzw. 54, das mittels eines von aussen zugänglichen Schlitzes 55 bzw. 56 bewegbar ist. Die Schneckenräder 53 und 54 sind in Bohrungen 57 und 58 des Gehäuses 2 in Randnähe angeordnet. Durch Betätigung der Schneckenräder 53 und 54 lassen sich somit die Potentiometer einstellen, wobei das eine Potentiometer zur Nullpunkt- und das andere Potentiometer zur Spanneneinstellung dient.

Ferner ist — siehe Figuren 2 und 3 — am stirnseitigen Bereich 17 des zentralen Tragkörpers 8 ein Zugbügel 60 schwenkbar gehalten. Der Zugbügel 60 kann einerseits in die Ebene des Stirnbereichs 17 des zentralen Tragkörpers 8 geschwenkt werden, andererseits aber nach vorn geklappt werden, so dass mit seiner Hilfe der zentrale Tragkörper 8 aus dem topfartigen Gehäuse 2 ziehbar ist. Ausserdem ist der Zugbügel 60 so gelagert, dass im eingeschobenen Zustand des Tragkörpers 8 ein Deckel 61 gegen den Zugbügel 60 drückt und damit den Tragkörper 8 im Gehäuse 2 kraftschlüssig arretiert.

Insbesondere den Figuren 1 und 2 lässt sich entnehmen, dass das topfartige Gehäuse 2 mit dem Deckel 61 verschliessbar ist, die mit einer Scheibe 62 versehen ist. Durch diese Scheibe 62 ist das Anzeigeinstrument ablesbar.

Eine weitere Öffnung 63 im topfartigen Gehäuse 2 zur Aufnahme des Messwerkes ist in Figur 1 nur schematisch angedeutet.

## Patentansprüche

1. Druck- oder Druckdifferenzmessgerät mit einem topfartigen Gehäuse (2), in dem mindestens ein elektronischer Schaltungsteil (18, 19) untergebracht und in dessen Boden (1) eine Öffnung (3) zur Befestigung eines den Druck oder die Druckdifferenz erfassenden Messwerkes vorhanden ist, dadurch gekennzeichnet, dass der mindestens eine elektronische Schaltungsteil als Flachbaugruppe (18, 19) ausgebildet und in das topfartige Gehäuse (2) mittels achsparalleler Führungen (10) an der Innenwand des Gehäuses (2) unter Erstreckung in einer achsparallelen Ebene eingeschoben ist und dass topfartige Gehäuse (2) in seiner Wand (6) in einem Bereich unterhalb der Flachbaugruppe (18) mindestens eine weitere Öffnung (5) zur Befestigung des Messwerkes aufweist.

2. Messgerät nach Anspruch 1, dadurch gekennzeichnet, dass das topfartige Gehäuse (2) einen seitlichen Ansatz (45) aufweist zur Bildung eines Aufnahmeraumes (44), der gegenüber dem Inneraum des Gehäuses durch eine druckdichte Wand mit elektrischen Durchführungen (40, 41) abgetrennt ist und in dem äussere Anschlussklemmen (42, 43) untergebracht sind, und dass die druckdichte Wand oberhalb der Flachbaugruppe (18) liegt.

3. Messgerät nach Anspruch 2, dadurch gekennzeichnet, dass die druckdichte Wand allein von einem oberhalb der Flachbaugruppe (18) liegenden Teil der Wand (6) des topfartigen Gehäuses (2) gebildet ist.

4. Messgerät nach Anspruch 2 oder 3, dadurch gekennzeichnet, dass die elektrischen Durchführungen (40, 41) an ihren in den Innenraum des Gehäuses (2) hineinreichenden Enden mit Kontakten (37) versehen sind und dass die Flachbaugruppe (18) Gegenkontakte (35, 36) trägt, die sich in eingeschobenem Zustand der Flachbaugruppe (18) in Berührung mit den Kontakten (37) befinden.

5. Messgerät nach einem der vorangehenden Ansprüche, dadurch gekennzeichnet, dass am Boden (1) das topfartigen Gehäuses (2) eine Kontaktleiste (31) angebracht ist, an die zu dem Messwerk führende Leitungen (33) angeschlossen sind, und dass die Flachbaugruppe (19) an einer Stirnseite eine Stekkerleiste (29) zum Einführen in die Kontaktleiste (31) trägt.

6. Messgerät nach einem der vorangehenden Ansprüche, dadurch gekennzeichnet, dass die Flachbaugruppe (18, 19) an einem zentralen Tragkörper (8) angebracht ist und dass der Tragkörper (8) auf seiner von dem Boden (1) des topfartigen Gehäuses (2) abgewandten Seite einen etwa kreisförmigen Stirnbereich (17) aufweist und sich etwa im rechten Winkel dazu erstreckende, achsparallele Führungsteile (11, 12) zum Eingriff mit den achsparallelen Führungen (10) an der Innenwand des topfartigen Gehäuses (2) enthält.

7. Messgerät nach Anspruch 6, dadurch gekennzeichnet, dass die Führungsteile (11, 12) des zentralen Tragkörpers (8) an ihren einander zugewandten Seiten Längsnuten (20) aufweisen, in die die Flachbaugruppe (18, 19) eingeführt ist.

8. Messgerät nach Anspruch 6 oder 7, dadurch gekennzeichnet, dass die Flachbaugruppe (18, 19) auf ihrer dem Stirnbereich (17) des zentralen Tragkörpers (8) zugewandten Seite Kontaktfedern (22, 23) trägt, die in Durchgangslöcher (27, 28) im Stirnbereich (17) hineinragen und dort lösbar verriegelt sind.

9. Messgerät nach einem der Ansprüche 6 bis 8, dadurch gekennzeichnet, dass in dem Stirnbereich (17) des zentralen Tragkörpers (8) ein Anzeigeinstrument (15) mittels einer Schnappverbindung befestigt ist.

10. Messgerät nach einem der Ansprüche 6 bis 9, dadurch gekennzeichnet, dass an dem Stirnbereich (17) des zentralen Tragkörpers (8) ein schwenkbarer Zugbügel (60) gehalten ist.

11. Messgerät nach Anspruch 10, dadurch gekennzeichnet, dass der Zugbügel (60) derart federnd gelagert ist, dass im eingeschobenen Zustand der Flachbaugruppe (18) bzw. des zentralen Tragkörpers (8) ein das Gehäuse (2) abschliessender Deckel (61) gegen den Zugbügel (60) drückt.

## Claims

1. A pressure- or differential pressure measuring device comprising a cup-like housing (2) in which at least one electronic circuit component (18, 19) is accomodated and whose base (1) contains an opening (3) for the attachement of a measuring apparatus which detects the pressure or the differential pressure, characterised in that that least one electronic circuit component consists of a flat assembly (18, 19) and is inserted into the cup-like housing (2) by means of paraxial guides (10) on the inner walls of the housing (2), extending a paraxial plane, and that in a zone below the flat assembly (18) the wall (6) of the cup-like housing (2) contains at least one further opening (5) for the attachment of the measuring apparatus.

2. A measuring device as claimed in claim 1, characterised in that the cup-like housing (2) has a lateral projection (45) thus forming an accomodating chamber (44) which is separated from the interior of the housing by a pressure-tight wall provided with electrical ducts (40, 41) and in which external connection terminals (42, 43) are arranged, and that the pressure-tight wall is located above the flat assembly (18).

3. A measuring device as claimed in claim 2, characterised in that the pressure-tight wall is formed solely by a part of the wall (6) of the cup-like housing (2) which is located above the flat assembly.

4. A measuring device as claimed in claim 2 or 3, characterised in that at their ends which extend into the interior of the housing (2) the electrical ducts (40, 41) are provided with contacts (37), and that the flat assembly (18) bears counter-contacts (35, 36) which, when the flat assembly (18) is in the inserted position, are in contact with the contacts (37).

5. A measuring device as claimed in one of the preceding claims, characterised in that a contact strip (31) is arranged on the base (1) of the cup-like housing (2), leads (33), which lead to the measuring apparatus, being connected to said contact strip (31), and that at one end side the flat assembly (19) bears a plug strip (29) which is inserted into the contact strip (31).

6. A measuring device as claimed in one of the preceding claims, characterised in that the flat assembly (18, 19) is arranged on a central bearing component (8) and that on its side facing away from the base (1) of the cup-like housing (2) the bearing component (8) has an aproximately circular end zone (17) and contains paraxial guide components (11, 12) which extend approximately at right-angles thereto and which engage with the paraxial guides (10) on the inner wall of the cup-like housing (2).

7. A measuring device as claimed in claim 6, characterised in that on their sides facing towards one another the guide components (11, 12) of the central bearing component (8) are provided with longitudinal grooves (20) into which the flat assembly (18, 19) is inserted.

8. A measuring device as claimed in claim 6 or 7, characterised in that on its side facing towards the end zone (17) of the central bearing component (8) the flat assembly (18, 19) bears contact springs (22, 23) which project into through-holes (27, 28) in the end zone (17) in which they are locked so as to be detachable.

9. A measuring device as claimed in one of the claims 6 to 8, characterised in that a display instrument (15) is secured in the end zone (17) of the central bearing component (8) by means of a snap connection.

10. A measuring device as claimed in one of the claims 3 to 6, characterised in that a pivotable draw yoke (60) is mounted at the end zone (17) of the central bearing component (8).

11. A measuring device as claimed in claim 10, characterised in that the draw yoke (60) is spring-mounted in such manner that when the flat assembly (18) and the central bearing component (8) are in the interested state, a cover (61) which closes off the housing (2) presses against the draw yoke (60).

## Revendications

1. Appareil de mesure de la pression ou d'une diffe- rence de pression, comprenant un boîtier (2) en forme de pot, dans lequel est logée au moins une partie électronique du circuit (18, 19) et dans le fond (1) duquel est ménagée une ouverture (3) de fixation d'un systeme de mesure détectant la pression ou une différence de pression, caractérisé en ce que l'une au moins des parties électroniques du circuit est constituée en un groupe constitutif plat (18, 19) et est introduite dans le boîtier (2) en forme de pot en s'y étendant dans un plan parallèle à l'axe au moyen de coulisses (10) parallèles à l'axe ménagées sur la paroi intérieure du boîtier (2) et en ce que la paroi (6) du boîtier (2) en forme de pot comporte, dans une région située en-dessous du groupe constitutif plat (18), au moins une autre ouverture (5) de fixation du système de mesure.

2. Appareil de mesure suivant la revendication 1, caractérisé en ce que le boîtier (2) en forme de pot comporte un prolongement latéral (45) destiné à former une chambre de réception (44), qui est séparée de l'intérieur du boîtier par une cloison étanche à la pression et munie de traversées électriques (40, 41) et dans laquelle sont logées des bornes de raccordement (42, 43) extérieures, et en ce que la cloison étanche à la pression est au-dessus du groupe constitutif plat (18).

3. Appareil de mesure suivant la revendication 2, caractérisé en ce que la cloison étanche à la pression est formée seulement par une partie de la cloison (6) du boîtier (2) en forme de pot, qui se trouve au-dessus du groupe constitutif plat (18).

4. Appareil de mesure suivant la revendication 2 ou 3, caractérisé en ce que les traversées électriques (40, 41) sont munies de contacts (37) à leur extremité pénétrant à l'intérieur du boîtier (2) et en ce que le groupe constitutif plat (18) porte des contacts antagonistes (35, 36) qui touchent les contacts (37) lorsque le groupe constitutif plat (18) est introduit dans le boîtier.

5. Appareil de mesure suivant l'une des revendications précédentes, caractérisé en ce que, sur le fond (1) du boîtier (2) en forme de pot, est fixée une barrette de contact (31) à laquelle sont raccordés les conducteurs (33) menant au système de mesure et en ce que le groupe constitutif plat (19) porte, sur son côté frontal, une barrette à fiches (29) destinée à être introduite dans la barrette de contact (31).

6. Appareil de mesure suivant l'une des revendications précedentes, caractérisé en ce que le groupe constitutif plat (18, 19) est fixé sur une pièce-support (8) centrale, et en ce que la pièce-support (8) comporte, sur son côté éloigné du fond (1) du boîtier (2) en forme de pot, une région frontale (17) à peu près circulaire et comprend des parties de guidage (11, 12) parallèles à l'axe, s'étendant à peu près à angle droit par rapport à la région (17) et destinées à pénétrer dans les coulisses (10) parallèles à l'axe ménagées sur la paroi intérieure du boîtier (2) en forme de pot.

7. Appareil de mesure suivant la revendication 6, caractérisé en ce que les parties de guidage (11, 12) de la pièce-support (8) centrale component, sur leur côté tourné l'un vers l'autre, des gorges longitudinales (20) dans lesquelles est introduit le groupe constitutif plat (18, 19).

8. Appareil de mesure suivant la revendication 6 ou 7, caractérisé en ce que le groupe constitutif plat (18, 19) porte, sur son côté tourné vers la région frontale, (17) de la pièce-support (8) centrale, des ressorts de contact (22, 23) qui font saillie dans des trous de passage (27, 28) ménagés dans la région frontale (17) et qui sont verrouillés de façon amovible.

9. Appareil de mesure suivant l'une des revendications 6 à 8, caractérisé en ce qu'un instrument d'affichage (15) est fixé, au moyen d'une liaison à encliquetage, dans la région frontale (17) de la pièce-support (8) centrale.

10. Appareil de mesure suivant l'une des revendications 6 à 9, caractérisé en ce qu'un arceau de traction (60) susceptible de basculer est maintenu sur la région frontale (17) de la pièce-support (8) centrale.

11. Appareil de mesure suivant la revendication 10, caractérisé en ce que l'arceau de traction (60) est monté élastiquement de manière qu'un couvercle (61) fermant le boîtier (2) pousse l'arceau de traction (60) quand le groupe constitutif plat (18) ou la pièce-support (8) centrale est introduit dans le boîtier.

FIG.1

FIG.2

FIG.3